# EUROPÄISCHE PATENTSCHRIFT

(11) **EP 0 793 588 B1**
(45) Veröffentlichungstag und Bekanntmachung des Hinweises auf die Patenterteilung: **12.04.2000**
(21) Anmeldenummer: 96933416.8
(22) Anmeldetag: 27.09.1996
(51) Int. Cl.: B60R 22/46

(54) **DREHANTRIEBSVORRICHTUNG FÜR EINEN GURTSTRAFFER**
ROTARY DRIVE FOR A BELT RETRACTOR
MECANISME ROTATIF D'ENTRAINEMENT POUR UN RETRACTEUR DE CEINTURE DE SECURITE

(30) Priorität: 02.10.1995 DE 29515703 U
(43) Veröffentlichungstag der Anmeldung: 10.09.1997
(73) Patentinhaber: FÖHL, Artur, 73614 Schorndorf (DE)
(72) Erfinder: FÖHL, Artur, 73614 Schorndorf (DE)
(74) Vertreter: Degwert, Hartmut, Dipl.-Phys.
(86) Internationale Anmeldenummer: EP9604235
(87) Internationale Veröffentlichungsnummer: WO9712786

(56) Entgegenhaltungen:
- EP-A- 0 152 395
- EP-A- 0 648 652
- DE-A- 2 535 380
- DE-A- 4 421 758
- DE-U- 9 415 157
- DE-U- 29 500 807
- DE-U- 29 506 208
- US-A- 2 713 769

## Beschreibung

Die Erfindung betrifft eine Drehantriebsvorrichtung für einen Gurtstraffer, mit einem Gehäuse, in dem ein Zylinderraum gebildet ist, einem exzentrisch in diesem gelagerten, allgemein kreisscheibenförmigen Rotor und einer Druckgasquelle zur Druckbeaufschlagung der zwischen dem Rotor und der Wandung des Gehäuses gebildeten Kammern, wobei der Rotor am Gehäuse und in bezug auf eine Welle drehbar gelagert ist und wenigstens eine schwenkbar gelagerte Kupplungsklinke trägt, die in eine Kupplungsverzahnung am Umfang der Welle einsteuerbar ist.

Aus der DE-PS 28 14 487 ist eine Antriebsvorrichtung bekannt, bei der der Rotor direkt an die Gurtspule eines Gurtaufrollers angekoppelt ist. Daraus ergibt sich eine gute Ausnutzung der von der Druckgasquelle zur Verfügung gestellten Energie im Vergleich zu anderen Bauformen von Gurtstraffern, bei denen eine Linearbewegung erst in eine Drehbewegung umgesetzt werden muß. Die Druckgasquelle, ein pyrotechnischer Gasgenerator, beaufschlagt bei der bekannten Antriebsvorrichtung die zwischen den Lamellen des Rotors gebildeten Kammern jedoch nicht direkt, sondern mittels eines flüssigen Arbeitsmediums wie Wasser, da es nicht gelingt, den Rotor im Gehäuse ausreichend abzudichten, ohne die Leichtgängigkeit der Gurtspule im Gurtaufroller durch den angekoppelten Rotor zu beeinträchtigen.

Eine Drehantriebsvorrichtung der eingangs genannten Art ist in der gattungsbildenden DE-U-295 06 208 beschrieben. Bei dieser Vorrichtung wird ein in einem Gehäuse in bezug auf die Gurtwellenachse exzentrisch gelagerter Drehkolben durch ein Treibmittel angetrieben. Bei der Beaufschlagung des Kolbens mit dem Treibmittel kann es zu unerwünschten Verlusten kommen, die eine höhere Auslegung der Treibmittelmenge bzw. des dadurch erzeugten Drucks erfordern.

Durch die Erfindung wird eine Drehantriebsvorrichtung für einen Gurtstraffer zur Verfügung gestellt, die eine optimale Ausnutzung der von der Druckgasquelle abgegebenen Gase ermöglicht, ohne daß der Bauraum der Vorrichtung vergrößert wird.

Bei der erfindungsgemäßen Drehantriebsvorrichtung sind die Kammern durch in radialen Schlitzen des Rotors aufgenommene Lamellen abgegrenzt und durch ein Dichtungssystem am Rotor gegeneinander sowie gegen das Gehäuse abgedichtet, und die Kupplungsklinke ist in einer vom Dichtungssystem umgebenen Ausnehmung an einer Stirnfläche des Rotors zwischen zwei benachbarten Lamellen gelagert und an der Wandung der Ausnehmung abgestützt. Das Dichtungssystem gewährleistet geringe Verluste bei Beaufschlagung der Kammern unmittelbar durch die von der Druckgasquelle abgegebenen Gase. Die zwischen Welle und Rotor angeordnete Kupplungsklinke ermöglicht die Abkopplung des Rotors von der Welle im normalen Ruhezustand. Durch die Anordnung der Kupplungsklinke in einer Ausnehmung an einer Stirnfläche des Rotors zwischen zwei benachbarten Lamellen wird die Kupplungsfunktion in die Drehantriebsvorrichtung integriert, ohne ihren Raumbedarf zu vergrößern.

Damit die Kupplungsklinke trotz der gedrängten Bauform große Kräfte übertragen kann, ist sie vorzugsweise an ihrem von der Klinkenspitze abgewandten Ende ballig gerundet und an einer entsprechend gerundeten Fläche der Ausnehmung abgestützt. Vorzugsweise ist die Kupplungsklinke durch eine Feder in eine Ruhestellung außer Eingriff mit der Kupplungsverzahnung an der Welle gehalten und wird durch Trägheitskräfte bei Beschleunigung des Rotors in Eingriff mit der Kupplungsverzahnung bewegt.

Nach vollendeter Gurtstraffung wird die Kupplungsklinke gemäß einer bevorzugten Ausführungsform durch die Feder wieder in die Ruhestellung zurückbewegt, so daß der Rotor erneut von der Welle abgekoppelt ist. Die an die Welle angeschlossene Gurtspule des Gurtaufrollers ist wieder frei drehbar, als wäre die normale Funktion des Gurtaufrollers wieder hergestellt. Diese Funktion ist insbesondere dann wichtig, wenn der Gurtstraffer ausgelöst hat, z.B. bei einem leichten Auffahrunfall, das Auto jedoch anschließend noch fahrtüchtig ist, um es von der Straße oder zu einer Reparaturwerkstätte zu bewegen. In diesem Fall kann sich der Fahrzeuginsasse nach Ablegen des Gurtes wieder angurten. Die Drehantriebsvorrichtung ist zwar nicht mehr betätigbar, der Gurtaufroller samt seiner Blockierautomatik arbeitet jedoch wie ein Gurtaufroller ohne Gurtstraffer.

Weitere Merkmale und Vorteile der Erfindung ergeben sich aus der folgenden Beschreibung und aus der Zeichnung, auf die Bezug genommen wird. In der Zeichnung zeigen:
Figur 1 eine Explosionsansicht der Drehantriebsvorrichtung gemäß einer ersten Ausführungsform;
Figur 2 eine Schnittansicht des Rotors der Drehantriebsvorrichtung nach Fig. 1;
Figur 3 eine Seitenansicht auf eine Stirnfläche des in Figur 2 gezeigten Rotors;
Figur 4 eine Seitenansicht einer zweiten Ausführungsform der erfindungsgemäßen Drehantriebsvorrichtung, mit einer in den Rotor eingebauten Kupplungsklinke, die durch eine Schraubenfeder in den Ruhezustand gedrückt wird;
Figur 5 die Kupplungsklinke nach Figur 4 bei aktivierter Drehantriebsvorrichtung;
Figur 6 eine perspektivische Ansicht eines Teils des in den Figuren 4 und 5 angedeuteten Rotors;
Figur 7 eine Seitenansicht einer dritten Ausführungsform in der Ruhestellung; und
Figur 8 eine Seitenansicht der dritten Ausführungsform, die die Klinke nach erfolgter Gurtstraffung zeigt.

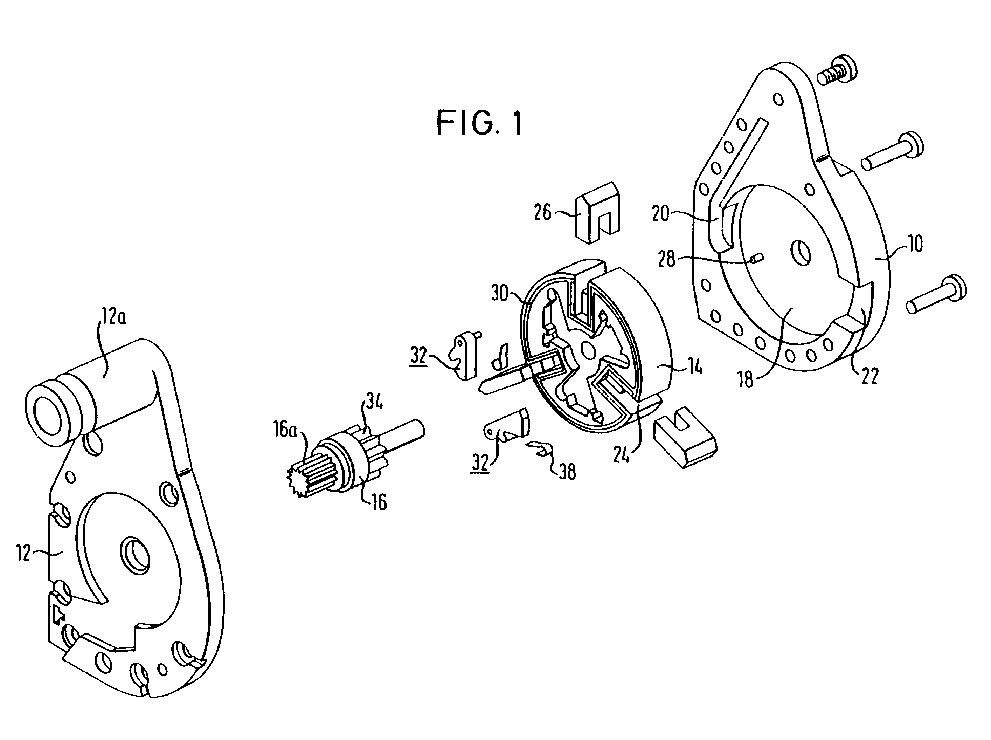

Die Hauptbestandteile der in Figur 1 gezeigten Drehantriebsvorrichtung sind ein Gehäuse, das aus einer Gehäuseglocke 10 und einem Gehäusedeckel 12 besteht, ein scheibenförmiger Rotor 14 und eine Antriebswelle 16, die im Rotor 14 und in einer Bohrung des Gehäusedeckels 12 drehbar gelagert ist. Der Rotor 14 ist in einer Bohrung der Gehäuseglocke 10 sowie auf der Welle 16 drehbar gelagert. Die Welle 16 trägt eine Kerbverzahnung 16a, mittels welcher sie an die Gurtspule eines nicht gezeigten Gurtaufrollers angeschlossen wird.

Der Rotor 14 ist in einem durch die Gehäuseglocke 10 abgegrenzten Zylinderraum 18 aufgenommen. In die Wandung der Gehäuseglocke 10 ist ein Einlaß 20 eingearbeitet, durch den die von einer Druckgasquelle erzeugten Gase in den Zylinderraum 18 eingeleitet werden. Diese Druckgasquelle ist in einem seitlichen Ansatz 12a des Gehäusedeckels 12 aufgenommen. Dem Einlaß 20 etwa gegenüberliegend ist in der Wandung der Gehäuseglocke 10 ferner ein Auslaß 22 ausgespart.

Der Rotor 14 ist mit drei radialen Schlitzen 24 versehen, in denen jeweils eine Lamelle 26 verschiebbar aufgenommen ist. Jeder dieser Schlitze 24 steht an seinem radial inneren Ende über einen Strömungskanal mit dem Zylinderraum 18 in Verbindung. Zwischen dem Rotor 14, den Lamellen 26 und der Wandung des Zylinderraums 18 sind druckbeaufschlagbare Kammern gebildet, die wegen der exzentrischen Anordnung des Rotors 14 im Gehäuse insgesamt sichelförmig sind.

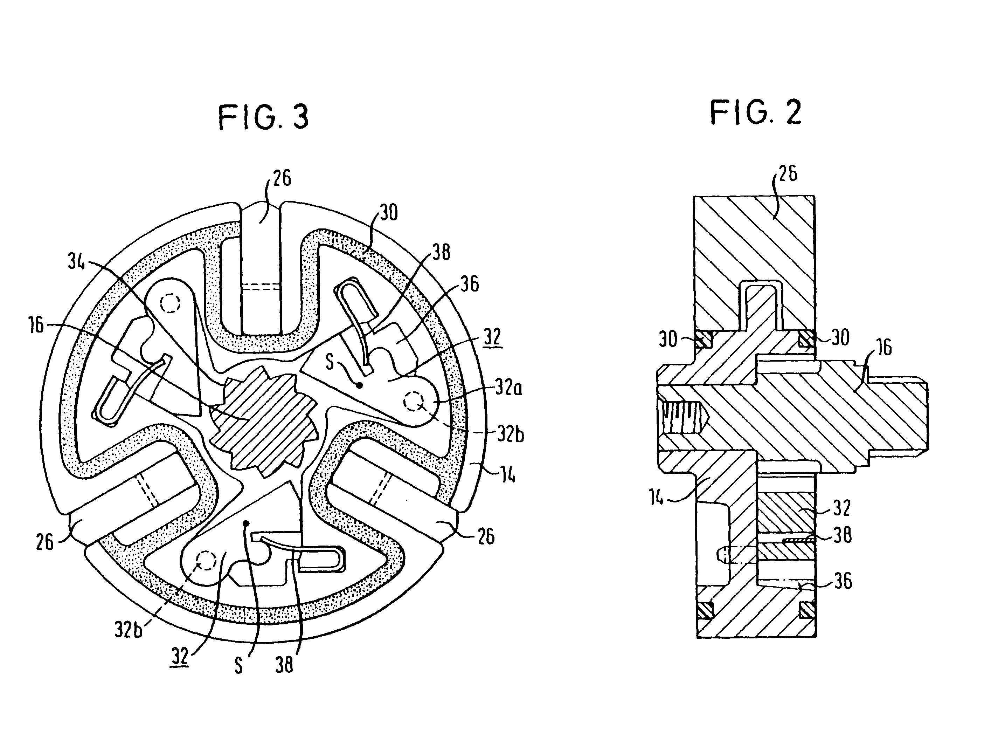

Diejenige Lamelle 26, welche die einlaßseitige Kammer in Drehrichtung des Rotors 14 an ihrem vorderen Ende abschließt, ist durch einen Scherstift 28 an der Gehäuseglocke 10 in einer ausgefahrenen Stellung fixiert, bei welcher ihr radial äußeres Ende mit der Wandung der Gehäuseglocke 10 in Dichteingriff steht. Wie am besten aus Figur 3 ersichtlich ist, wird die Abdichtung der Kammern gegeneinander und gegen das Gehäuse ferner durch ein Dichtsystem bewerkstelligt, das im wesentlichen aus einer Profildichtung 30 besteht, die jeweils in eine durchgehende Nut an den Stirnflächen des Rotors eingelegt ist. Die Profildichtung erstreckt sich durchgehend entlang dem Außenumfang des Rotors 14 sowie radial einwärts und wieder auswärts um die Lamellen 26 herum.

Da der Rotor 14 durch den Scherstift 28 und das Dichtsystem mit der Profildichtung 30 drehfest am Gehäuse gehalten ist, wird eine Kupplung verwendet, um den Rotor 14 bei Aktivierung der Druckgasquelle an die Welle 16 triebschlüssig anzukoppeln.

Diese Kupplung besteht aus drei schwenkbar an einer Stirnfläche des Rotors 14 gelagerten Kupplungsklinken 32 und einer am Umfang der Welle 16 angebrachten Kupplungsverzahnung 34. Jede der Kupplungsklinken 32 ist in einer Ausnehmung 36 einer Stirnfläche des Rotors 14 aufgenommen und abgestützt. Die Kupplungsklinken 32 haben jeweils ihrer Klinkenspitze gegenüberliegend ein ballig gerundetes Ende 32a, das an einer entsprechend gerundeten Fläche der Ausnehmung 36 gleitend abgestützt ist. Jede der Klinken 32 ist mittels eines zugehörigen Lagerzapfens 32b schwenkbar am Rotor 14 gelagert. Die Klinken 32 werden jeweils durch eine Blattfeder 38 in einer Ruhestellung gehalten, die durch Anlage an einer Fläche der Ausnehmung 36 definiert ist. In dieser Ruhestellung liegt der mit S bezeichnete Schwerpunkt jeder Klinke 32, auf den Lagerzapfen 32b bezogen, radial innen, so daß die Massenträgheitskräfte an der Klinke mit einem Hebelarm r angreifen und bestrebt sind, die Klinke in Eingriff mit der Kupplungsverzahnung 34 zu verschwenken, wenn der Rotor 14 entgegen dem Uhrzeigersinn beschleunigt wird. Wenn der Rotor 14 nach vollendeter Gurtstraffung zur Ruhe kommt, werden die Klinken 32 durch die zugeordneten Blattfedern 38 wieder in die Ruhestellung zurückbewegt. Die Blattfedern sind im übrigen jeweils in eine U-förmige seitliche Ausnehmung des Rotors 14 geklemmt.

Wie aus Figur 3 ersichtlich ist, sind die Klinken 32, auf die Spitzen der Kupplungsverzahnung 34 bezogen, in Umfangsrichtung geringfügig gegeneinander versetzt. Durch diese Versetzung wird gewährleistet, daß bei einem zufälligen Aufeinandertreffen von zwei Zahnspitzen eine benachbarte Kupplungsklinke in eine optimale Eingriffsstellung gelangt. Ferner ist die besondere Form der Kupplungsverzahnung 34 ersichtlich. Diese besteht aus Zähnen mit geraden Zahnflanken und gekrümmten Zahnrücken. Die gekrümmten Zahnrücken erleichtern die Rückbewegung der Kupplungsklinken 32 in ihre Ruhestellung bei einer Relativdrehung zwischen Rotor 14 und Welle 16 entgegengesetzt zu der Richtung, in welcher der Rotor zur Gurtstraffung gedreht wird.

Schließlich ist aus Figur 3 ersichtlich, daß die Kupplung zwischen Rotor 14 und Welle 16 in die Drehantriebsvorrichtung integriert werden konnte, ohne deren Baugröße, insbesondere in Axialrichtung, zu vergrößern.

Ein nicht gezeigter elektrischer Auslösesensor erzeugt im Rückhaltefall ein Signal, das z.B. bei Vorsehen eines pyrotechnischen Gasgenerators zum Zünden des pyrotechnischen Materials führt. Das Gas strömt über den Einlaß 20 in das Gehäuse und treibt den Rotor 14 an. Der Schwerpunkt jeder Kupplungsklinke 32 ist relativ zu ihrer Drehachse so angeordnet, daß die Trägheitskräfte bei der abrupten Beschleunigung des Rotors 14 zu einem Schwenken der Kupplungsklinken 32 nach innen führen. Nach dem Einrasten wenigstens einer Kupplungsklinke 32 in die Kupplungsverzahnung 34 werden die Welle 16 und der Gurtaufroller in Drehung versetzt. Nach beendeter Gurtstraffung drücken die Blattfedern 38 die Kupplungsklinken 32 wieder in ihre Ruhestellung zurück, so daß die Welle 16 frei drehbar ist.

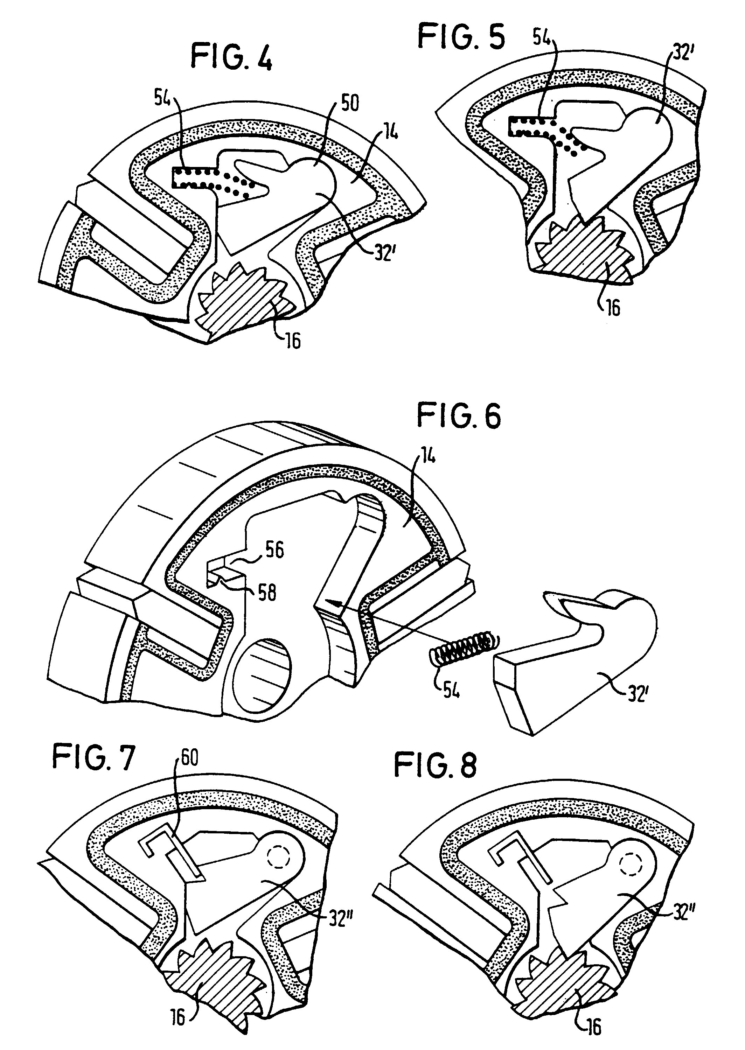

Die in den Figuren 4 bis 6 gezeigte zweite Ausführungsform der Drehantriebsvorrichtung unterscheidet sich von der zuvor beschriebenen lediglich durch eine andere Ausbildung der Kupplungsklinke und der zugeordneten Federn. Die Kupplungsklinken 32' sind in dieser Ausführungsform nicht durch einen Lagerzapfen 32b am Rotor 14 gelagert. Sie weisen vielmehr ein Ende 50 mit einer zylindrischen Außenkontur auf, die in einer komplementär geformten Ausnehmung im Rotor 14 schwenkbar gelagert ist. Jede Kupplungsklinke 32' wird durch eine Schraubenfeder 54 in ihre Ruhestellung gedrückt. Die Schraubenfeder 54 ist auf Block gewickelt, vorzugsweise unter Vorspannung, und wird in eine seitliche Ausnehmung 56 (vgl. Figur 6) im Rotor 14 gedrückt. Die im Querschnitt rechteckige Ausnehmung 56 weist eine in sie hineinragende Nase 58 auf, die zur Arretierung der Schraubenfeder 54 dient. Die Schraubenfeder 54 wird seitlich in die Ausnehmung 56, wie in Figur 6 durch einen Pfeil angezeigt, eingeführt. Die Nase 58 schiebt sich dabei zwischen zwei aufeinanderfolgende Federwindungen. Das der Kupplungsklinke 32' abgewandte Ende der Schraubenfeder 54 wird zudem gegen die entsprechende Stirnfläche, die die Ausnehmung 56 begrenzt, gedrückt. Dadurch ist die Schraubenfeder 54 in axialer und radialer Richtung bereits vor dem Aufsetzen des Gehäusedeckels 12 lagefest.

Die Schraubenfeder 56 berührt mit ihrem Umfang einen Vorsprung der Kupplungsklinke 32' und wird dadurch geringfügig gebogen. Beim Auslösen der Drehantriebsvorrichtung knickt die Schraubenfeder 54, wie in Figur 5 gezeigt, ab, wenn die Kupplungsklinke 32' nach innen schwenkt. Nach erfolgter Gurtstraffung drückt die Schraubenfeder 54 die Kupplungsklinke 32' wieder in die in Figur 4 gezeigte Ruhestellung.

Die in den Figuren 4 bis 6 gezeigte Ausführungsform erlaubt eine maschinelle Montage der Schraubenfeder 54 ohne aufwendige Einführhilfen. Die Federabmessungen können bei dieser Ausführungsform sehr klein gehalten werden. Bereits Schraubenfedern mit einem Außendurchmesser von 1,6 bis 2 mm bei einer Federdrahtstärke von 0,3 mm haben sich als geeignet erwiesen.

Die in Figur 7 gezeigte Ausführungsform unterscheidet sich von der in Figur 3 gezeigten dadurch, daß die auf die Kupplungsklinken 32" einwirkenden Blattfedern 60 die Kupplungsklinken 32" zwar in die in Figur 7 gezeigte Ruhestellung drücken, in der sie nicht in die Kupplungsverzahnung 34 eingreifen. Jedoch greift ein freies Ende jeder Blattfeder 60 so an einem Vorsprung an der zugeordneten Kupplungsklinke 32" an, daß, wie in Figur 8 gezeigt, die Blattfeder 60 bei der Gurtstraffung außer Eingriff mit der Kupplungsklinke 32" kommt und sie deshalb auch nach erfolgter Gurtstraffung nicht mehr außer Eingriff mit der Kupplungsverzahnung 34 bringen kann. Die Welle 16 wird dadurch am Drehen gehindert. Die Blattfeder 60 verhindert in der in Figur 8 gezeigten Stellung sogar ein Zurückschwenken der Kupplungsklinke 32" und wirkt als Verriegelung. Zwar ist bei dieser Ausführung nach erfolgter Gurtstraffung die normale Funktion des Gurtaufrollers nicht wiederhergestellt, jedoch wird der Benutzer durch die blockierte Aufrollerwelle auf die nicht mehr gegebene Funktionsfähigkeit des Gurtstraffers aufmerksam gemacht und zum Aufsuchen einer Werkstatt veranlaßt.

## Patentansprüche

1. Drehantriebsvorrichtung für einen Gurtstraffer, mit einem Gehäuse (10), in dem ein Zylinderraum (18) gebildet ist, einem exzentrisch in diesem gelagerten, allgemein kreisscheibenförmigen Rotor (14) und einer Druckgasquelle zur Druckbeaufschlagung der zwischen dem Rotor und der Wandung des Gehäuses gebildeten Kammern, wobei der Rotor (14) am Gehäuse (10, 12) und in bezug auf eine Welle (16) drehbar gelagert ist und wenigstens eine schwenkbar gelagerte Kupplungsklinke (32) trägt, die in eine Kupplungsverzahnung (34) am Umfang der Welle (16) einsteuerbar ist, dadurch gekennzeichnet, daß die Kammern durch in radialen Schlitzen (24) des Rotors (14) aufgenommene Lamellen (26) abgegrenzt und durch ein Dichtungssystem (30) am Rotor (14) gegeneinander sowie gegen das Gehäuse (10, 12) abgedichtet sind und daß die Kupplungsklinke (32) in einer vom Dichtungssystem (30) umgebenen Ausnehmung (36) an einer Stirnfläche des Rotors (14) zwischen zwei benachbarten Lamellen (26) gelagert und an der Wandung der Ausnehmung abgestützt ist.

2. Drehantriebsvorrichtung nach Anspruch 1, dadurch gekennzeichnet, daß die Kupplungsklinke (32; 32'; 32") durch eine Feder (38, 54, 60) in eine Ruhestellung außer Eingriff mit der Kupplungsverzahnung (34) an der Welle (16) gehalten ist und durch Trägheitskräfte bei Beschleunigung des Rotors (14) in Eingriff mit der Kupplungsverzahnung (34) bewegbar ist.

3. Drehantriebsvorrichtung nach Anspruch 2, dadurch gekennzeichnet, daß die Feder (38; 54) die Kupplungsklinke (32; 32') nach erfolgter Gurtstraffung außer Eingriff mit der Kupplungsverzahnung (34) bringt und eine Drehung der Welle (16) erlaubt.

4. Drehantriebsvorrichtung nach Anspruch 3, dadurch gekennzeichnet, daß die Feder eine an dem Rotor (14) durch Klemmen befestigte Blattfeder (38; 60) oder eine auf Biegung belastete Schraubenfeder (54) ist.

5. Drehantriebsvorrichtung nach Anspruch 4, dadurch gekennzeichnet, daß die Kupplungsklinke (32; 32'; 32") an ihrem von der Klinkenspitze abgewandten Ende ballig gerundet und an einer entsprechend gerundeten Fläche der Ausnehmung (36) abgestützt ist.

6. Drehantriebsvorrichtung nach einem der vorstehenden Ansprüche, dadurch gekennzeichnet, daß mehrere Kupplungsklinken (32; 32'; 32") vorgesehen sind, von denen wenigstens zwei, auf die Zahnspitzen der Kupplungsverzahnung (34) an der Welle bezogen, in Umfangsrichtung des Rotors (14) gegeneinander versetzt sind.

7. Drehantriebsvorrichtung nach einem der vorstehenden Ansprüche, dadurch gekennzeichnet, daß die Kupplungsverzahnung (34) an der Welle (16) gerade Zahnflanken und gekrümmte Zahnrücken aufweist.

8. Drehantriebsvorrichtung nach einem der vorstehenden Ansprüche, dadurch gekennzeichnet, daß wenigstens eine der Lamellen (26) lösbar, insbesondere mittels eines Scherstiftes, am Gehäuse (10, 12) festgelegt ist.

## Claims

1. A rotary drive apparatus for a belt tensioner, comprising a casing (10) in which a cylinder space (18) is formed, a generally circular disk-shaped rotor (14) mounted eccentrically therein, and a compressed gas source for pressurizing the chambers formed between the rotor and the wall of the casing, said rotor (14) being mounted on said casing (10, 12) and being rotatable with respect to a shaft (16) and carrying at least one pivotally mounted clutch pawl (32) which is engagingly positionable in a clutch toothing (34) on the circumference of said shaft (16), characterized in that said chambers are defined by vanes (26) accommodated in radial slots (24) of the rotor (14) and are sealed off both with respect to each other and to the casing (10, 12) by a sealing system (30) on the rotor (14), and that said clutch pawl (32) is mounted in a recess (36) surrounded by said sealing system (30) on one end face of the rotor (14) between two adjacent vanes (26) and is supported at the wall of said recess.

2. The rotary drive apparatus as set forth in claim 1, characterized in that said clutch pawl (32; 32'; 32") is held in a resting position out of engagement with the clutch toothing (34) on said shaft (16) by a spring (38, 54, 60) and is adapted to be moved into engagement with said clutch toothing (34) by the forces of inertia on acceleration of said rotor (14).

3. The rotary drive apparatus as set forth in claim 2, characterized in that said spring (38; 54) disengages said clutch pawl (32; 32') from said clutch toothing (34) after belt tensioning has been completed, and permits a rotation of said shaft (16).

4. The rotary drive apparatus as set forth in claim 3, characterized in that said spring is a leaf spring (38; 60) secured to said rotor (14) by clamping or is a flexural loaded helical spring (54).

5. The rotary drive apparatus as set forth in claim 4, characterized in that said clutch pawl (32; 32'; 32") is crowned rounded at its end facing away from the tip of the pawl and is supported by a correspondingly rounded surface of said recess (36).

6. The rotary drive apparatus as set forth in any of the preceding claims, characterized in that several clutch pawls (32; 32'; 32") are provided, of which at least two are offset with respect to each other in the circumferential direction of the rotor (14) as related to the tooth tips of said clutch toothing (34) on said shaft.

7. The rotary drive apparatus as set forth in any of the preceding claims, characterized in that said clutch toothing (34) on said shaft (16) features straight tooth flanks and curved tooth backs.

8. The rotary drive apparatus as set forth in any of the preceding claims, characterized in that at least one of said vanes (26) is releasably fixed in place at said casing (10, 12), particularly by means of a shear pin.

## Revendications

1. Dispositif d'entraînement en rotation d'un tendeur de sangle, comprenant un carter (10) dans lequel un espace cylindrique (18) est formé, un rotor généralement en forme de disque circulaire (14) monté de façon excentrique dans ledit espace cylindrique et une source de gaz comprimé pour solliciter en pression des chambres formées entre le rotor et la paroi du carter, le rotor (14) étant monté sur le carter (10, 12) et rotatif par rapport à un arbre (16) et portant au moins un cliquet d'accouplement (32) monté de sorte à pouvoir pivoter et s'engager dans une denture d'accouplement (34) située sur le périmètre de l'arbre (16), caractérisé en ce que les chambres sont délimitées par des lamelles (26) logées dans des fentes (24) radiales du rotor (14) et sont rendues étanches les unes envers les autres ainsi qu'envers le carter (10, 12) par un système de joints (30) sur le rotor (14) et en ce que le cliquet d'accouplement (32) est logé dans un évidement (36) ceint par le système de joints (30) et situé entre deux lamelles (26) voisines sur une surface extérieure du rotor (14), le cliquet étant supporté par la paroi de l'évidement.

2. Dispositif d'entraînement en rotation selon la revendication 1, caractérisé en ce que le cliquet d'accouplement (32; 32'; 32'') est maintenu, désengagé de la denture d'accouplement (34), en position de repos sur l'arbre (16) par un ressort (38, 54, 60), et peut être mis en mouvement par les forces d'inertie lors de l'accélération du rotor (14) en prise avec la denture d'accouplement (34).

3. Dispositif d'entraînement en rotation selon la revendication 2, caractérisé en ce qu'après que la sangle ait été tendue, le ressort (38, 54) désengage le cliquet d'accouplement (32; 32') de la denture d'accouplement (34) et permet une rotation de l'arbre (16).

4. Dispositif d'entraînement en rotation selon la revendication 3, caractérisé en ce que le ressort est un ressort à lames (38, 60) fixé par serrage sur le rotor (14) ou un ressort à boudin (54) soumis à l'effort de flexion.

5. Dispositif d'entraînement en rotation selon la revendication 4, caractérisé en ce que le cliquet d'accouplement (32, 32',32'') est arrondi et bombé en son extrémité opposée à la pointe du cliquet et est en appui sur une surface arrondie lui correspondant du creux (36).

6. Dispositif d'entraînement en rotation selon l'une des revendications précédentes, caractérisé en ce que plusieurs cliquets d'accouplement (32, 32',32'') sont prévus, parmi lesquels au moins deux sont décalés les uns par rapport aux autres dans le sens du périmètre du rotor (14), relativement aux pointes de la denture d'accouplement (34) de l'arbre.

7. Dispositif d'entraînement en rotation selon l'une des revendications précédentes, caractérisé en ce que la denture d'accouplement (34) de l'arbre (16) présente des dents à front droit et à dos courbé.

8. Dispositif d'entraînement en rotation selon l'une des revendications précédentes, caractérisé en ce qu'au moins une des lamelles (26) est fixée au carter (10, 12) de sorte à pouvoir être détachée, en particulier au moyen d'un goujon de cisaillement.
